# EUROPÄISCHE PATENTSCHRIFT

(11) **EP 3 169 853 B1**
(45) Veröffentlichungstag und Bekanntmachung des Hinweises auf die Patenterteilung: **20.11.2019**
(21) Anmeldenummer: 15726544.8
(22) Anmeldetag: 01.06.2015
(51) Int. Cl.: E03C 1/02, F16L 33/20, F16L 27/10, F16L 33/22

(54) **FLEXIBLE SCHLAUCHLEITUNG**
FLEXIBLE HOSE
TUYAU FLEXIBLE

(30) Priorität: 18.07.2014 DE 202014006031 U
(43) Veröffentlichungstag der Anmeldung: 24.05.2017
(73) Patentinhaber: Neoperl GmbH, 79379 Müllheim (DE)
(72) Erfinder: REINHARDT, Holger, 79232 March/Buchheim (DE)
(74) Vertreter: Börjes-Pestalozza, Henrich
(86) Internationale Anmeldenummer: PCT/EP2015/001106
(87) Internationale Veröffentlichungsnummer: WO 2016/008557

(56) Entgegenhaltungen:
- EP-A1- 0 728 978
- WO-A1-2012/077549
- DE-U1- 9 005 930
- DE-U1- 9 400 850
- FR-A1- 2 543 844

## Beschreibung

Die Erfindung betrifft eine flexible Schlauchleitung mit einem Schlauchanschluss, der eine hülsenförmige Überwurfmutter aufweist, die ein hülsenförmiges Anschlussstück umgreift, das mit einem Schlauchende der flexiblen Schlauchleitung verbunden ist und das an seinem, dem Schlauchende abgewandten Stirnendbereich einen Ringflansch hat, der auf einem Ringabsatz einer Umfangswandung drehbar aufliegt, mit zumindest einem Dichtring, der in einer außenumfangsseitig am Anschlussstück vorgesehenen Haltenut gehalten ist und der einen zwischen dem Anschlussstück und der Umfangswandung vorgesehenen Ringspalt radial abdichtet.

Flexible Schlauchleitungen der eingangs erwähnten Art, die an den Schlauchenden die oben beschriebenen Schlauchanschlüsse haben, werden verwendet, um mit Hilfe dieser Schlauchleitungen eine Fluidquelle, beispielsweise ein sanitäres Eck- oder Anschlussventil, mit einem Fluidauslass, etwa einer Handbrause oder einer Sanitärarmatur, zu verbinden. Sofern die Fluidauslässe bei Bedarf zu handhaben sind, wie beispielsweise eine Handbrause, sind die vorbekannten Schlauchanschlüsse teils auch um ihre Längsachse frei drehbar ausgestaltet, um die Handhabung einer solchen Handbrause oder dergleichen Fluidauslasses zu erleichtern. Um die Trennebene zwischen dem Schlauchanschluss und dem damit verbundenen Fluideinlass oder -auslass abzudichten, sind Dichtungen aus elastischem Material vorgesehen, die meist als O-Ring ausgebildet sind. Von Nachteil ist dabei, dass dieser O-Ring durch Schmutzpartikel oder dergleichen Ablagerungen, beispielsweise auch durch Kalk, verbacken kann, wodurch die ohnehin könstruktionsbedingte, stark eingeschränkte Dreheigenschaft solcher Schlauchanschlüsse unter Umständen gänzlich unterbunden wird. In manchen Fällen kann auch ein Verlust der Dichtheit in Folge solcher Schmutzpartikel auftreten, wodurch schwerwiegende Schäden entstehen können.

Aus dem Stand der Technik sind auch Schlauchanschlüsse bekannt, die anstelle eines O-Rings eine Lippendichtung aufweisen, welche ein geringes Losbrechmoment erfordern, womit aber der Nachteil einhergeht, dass bei Verschmutzungen ein Verlust der Dichtheit auftreten kann, wenn durch Drehbewegungen diese Schmutzpartikel oder dergleichen Ablagerungen, wie beispielsweise Kalk, losgebrochen werden sollen.

Aus der WO 2012/077549 A1 kennt man bereits eine Schlauchleitung der eingangs erwähnten Art mit einem Schlauchanschluss, der eine hülsenförmige Überwurfmutter aufweist, die ein hülsenförmiges Anschlussstück umgreift, das mit einem Schlauchende der flexiblen Schlauchleitung verbunden ist. Das Anschlussstück hat an seinem dem Schlauchende abgewandten Stirnendbereich einen Ringflansch, der auf einen Ringabsatz einer Umfangswandung drehbar aufliegt. In einer außenumfangsseitig am Anschlussstück vorgesehenen Haltenut ist ein Dichtring gehalten, der einen zwischen dem Anschlussstück und der Umfangswandung vorgesehenen Ringspalt radial abdichtet. Dieser Dichtring weist einen sich in Längsrichtung des Anschlussstücks erstreckenden zylindrischen und am Nutgrund der Haltenut anliegenden Teilbereich auf, an den eine schräg nach außen in Richtung zur Überwurfmutter vorstehende, ringförmig umlaufende Dichtlippe einstückig angeformt ist.

Es besteht daher die Aufgabe, eine flexible Schlauchleitung der eingangs erwähnten Art mit einem Schlauchanschluss zu schaffen, dessen Funktionsfähigkeit und Drehbarkeit selbst im Falle von sich ablagernden Schmutzpartikeln möglichst lange noch gewährleistet werden kann.

Die erfindungsgemäße Lösung dieser Aufgabe besteht bei der Schlauchleitung der eingangs erwähnten Art darin, dass zwischen dem Anschlussstück und der Umfangswandung sowie zwischen dem Hülseninnenumfang der Überwurfmutter und der Schlauchleitung ein derart bemessenes Spiel vorgesehen ist, dass das Anschlussstück und Umfangswandung relativ zueinander kippbar sind.

Der erfindungsgemäße Schlauchanschluss weist eine hülsenförmige Überwurfmutter auf, mit welcher der Schlauchanschluss über eine Schraubverbindung mit einem zu- oder abströmseitigen Leitungsabschnitt verbunden werden kann. Die Überwurfmutter umgreift ein ebenfalls hülsenförmiges Anschlussstück, das mit einem Schlauchende einer flexiblen Schlauchleitung verbunden ist. An seinem dem Schlauchende abgewandten Stirnendbereich weist das Anschlussstück einen Ringflansch auf, der auf einem Ringabsatz einer im Hülseninneren der Überwurfmutter befindlichen Umfangswandung drehbar aufliegt. Um einen zwischen dem Anschlussstück und der Umfangswandung vorgesehenen Ringspalt radial abzudichten, ist zumindest ein Dichtring vorgesehen, der in einer außenumfangsseitig am Anschlussstück angeordneten Haltenut gehalten ist. Zwischen dem Anschlussstück und der Umfangswandung sowie zwischen dem Hülseninnenumfang der Überwurfmutter und der Schlauchleitung ist ein derart bemessenes Spiel vorgesehen, dass Anschlussstück und Umfangswandung relativ zueinander kippbar sind. Ein solches Verkippen zwischen Anschlussstück und Umfangswandung wird durch ein Biegen der mit dem Schlauchanschluss verbundenen Schlauchleitung, auch durch bloßes Bewegen der Schlauchleitung während des Gebrauchs, erreicht. Da die Umfangswandung der Überwurfmutter und das Anschlussstück relativ zueinander kippbar sind, ist selbst bei einem unerwünschten Festbacken der Überwurfmutter und des Anschlussstückes ein leichtes Losbrechen des Dichtringes möglich. Durch ein leichtes Losbrechen des Dichtringes wird ein unerwünschtes Festbacken der Überwurfmutter und des Anschlussstückes vermieden, was andernfalls ein leichtgängiges Verdrehen dieser Bestahdteile des Schlauchanschlusses behindern könnte. Die Umfangswandung mit dem Ringabsatz kann innenumfangsseitig an der Überwurfmutter vorgesehen sein. Eine bevorzugte und besonders funktionssichere Ausführungsform gemäß der Erfindung sieht demgegenüber vor, dass der Schlauchanschluss einen Zwischenring aufweist, der an der eine Ringöffnung umgrenzenden Umfangswandung den Ringabsatz trägt und der drehbar am Innenumfang der Überwurfmutter gehalten ist.

Eine Weiterbildung gemäß der Erfindung sieht vor, dass die Haltenut einen Nutgrund hat, der als eine konvex geformte Auswölbung ausgestaltet ist. Die für den zumindest einen Dichtring vorgesehene Haltenut weist somit einen Nutgrund auf, der als eine konvex geformte Auswölbung ausgestaltet ist. Der zwischen dem Nutgrund und der Umfangswandung dicht eingespannte Dichtring wird somit bei einer Kippbewegung tangential belastet, beziehungsweise die kugelige oder konvexe Form des Nutgrundes und der Dichtring werden tangential zueinander ausgerichtet. Da der Dichtring somit allseits mit einer verkleinerten, umlaufend linienförmigen Auflagefläche anliegt, wird ein leichteres Losbrechen des Dichtringes allein schon bei einem geringfügigen Verkippen des Anschlussstückes relativ zur Überwurfmutter erreicht.

Zweckmäßig ist es, wenn der Ringflansch und der an der Umfangswandung vorgesehene Ringabsatz um die Längsachse des Schlauchanschlusses relativ zueinander verdrehbar sind. Durch eine solche Verdrehbarkeit und/oder Rotationsfreiheit des erfindungsgemäßen Schlauchanschlusses um dessen Längsachse wird die Handhabung einer Handbrause oder eines anderen frei beweglichen Fluidauslasses wesentlich erleichtert.

Um den Zwischenring einerseits und die Überwurfmutter andererseits drehbar aneinander zu halten, ist es zweckmäßig, wenn der Zwischenring an seinem dem Schlauchende abgewandten Stirnendbereich außenumfangsseitig einen Ringflansch trägt, welcher Ringflansch auf einem am Hülseninnenumfang der Anschlussmutter vorgesehenen Ringabsatz oder Ringflansch vorzugsweise drehbar aufliegt. Durch die drehbare Verbindung zwischen dem Zwischenring einerseits und der Überwurfmutter andererseits wird das Aufschrauben der Überwurfmutter an dem Leitungsende eines zu- oder abströmseitigen Leitungsabschnitts erleichtert und die Bedienung läßt auch eine Positionierung zu.

Um ein unerwünschtes Austreten einer Teilmenge des in Richtung zum Schlauchanschluss geführten Fluids zu verhindern, ist es zweckmäßig, wenn auf der dem Schlauchende abgewandten Stirnseite des Zwischenrings eine Ringdichtung aufliegt, die einen Ringspalt zwischen dem Außenumfang des Zwischenrings und dem Innenumfang der hülsenförmigen Überwurfmutter axial abdichtet.

Eine besonders vorteilhafte Ausführungsform, die eine hohe Dichtheit im Bereich des Schlauchanschlusses gewährleistet, sieht vor, dass der Dichtring und vorzugsweise auch die Ringdichtung aus elastischem Material hergestellt sind.

Um ein Verkippen des Anschlussstückes nicht durch die auf dem Zwischenring stirnseitig aufliegende Ringdichtung zu behindern, ist es zweckmäßig, wenn die dem Schlauchende abgewandte Stirnfläche des Anschlussstücks von einer benachbarten Stirnseite der Ringdichtung beabstandet ist.

Eine bevorzugte Weiterbildung sieht vor, dass der am Anschlussstück vorgesehene Ringflansch gestuft ausgestaltet ist und auf seiner dem Schlauchende zugewandten Flansch-Innenseite einen ringförmig umlaufenden Falz trägt, welcher Falz im Vergleich zum lichten Durchmesser des Zwischenrings einen demgegenüber reduzierten Außendurchmesser aufweist. Dieser Falz bildet eine Stützkante, die auch bei einer Kippbewegung gewährleistet, dass der Anschlussstutzen gegenüber dem Zwischenring und der Überwurfmutterkonzentrisch gehalten ist und bleibt. Die durch den Falz gebildete Stützkante erleichtert die Kippbewegung des Anschlussstutzens in der Überwurfmutter. Durch die konzentrische Anordnung des Anschlussstutzens gegenüber der Überwurfmutter und dem Zwischenring wird gewährleistet, dass der Dichtring den Ringspalt zwischen Anschlussstutzen und Umfangswandung gut abdichtet.

Dabei ist es vorteilhaft, wenn das Anschlussstück zwischen einer koaxial oder achsparallel zur Längsachse der Überwurfmutter angeordneten Nullstellung und einer zur Längsachse der Überwurfmutter abgewinkelten Kippstellung kippbar ist und dass in der Kippstellung die am Ringflansch des Anschlussstücks vorgesehen Ringnut und der Ringabsatz zumindest in einem Umfangs-Teilbereich ineinander greifen.

Um eine Kippbewegung zwischen dem Anschlussstück einerseits und der Überwurfmutter sowie dem Zwischenring andererseits zu erleichtern, ist es zweckmäßig, wenn die die Nut umgrenzende und dem Schlauchende zugewandte Kante als umlaufender und vorzugsweise gerundeter Vorsprung ausgestaltet ist, und wenn der dem Schlauchende zugewandte Teilbereich des Anschlussstutzens einen im Vergleich zum Außendurchmesser des Vorsprungs reduzierten Außendurchmesser hat.

Damit der zwischen dem Anschlussstutzen einerseits und der Umfangswandung andererseits eingespannte Dichtring an diesen Bestandteilen des Schlauchanschlusses nur linienförmig anliegt, ist es vorteilhaft, wenn der Dichtring einen runden oder gerundeten Ringquerschnitt hat.

Weiterbildungen gemäß der Erfindung ergeben sich aus den Ansprüchen in Verbindung mit der Beschreibung sowie der Zeichnung. Nachstehend wird die Erfindung anhand eines bevorzugten Ausführungsbeispieles noch näher beschrieben.

Es zeigt:
- Fig. 1: einen in einem Längsschnitt dargestellten Schlauchanschluss, der ein hülsenförmiges: und mit einem Schlauchende verbundenes Anschlussstück aufweist, welches durch eine hülsenförmige Überwurfmutter umgriffen wird, wobei die Überwurfmutter und das Anschlussstück derart relativ zueinander positioniert sind, dass ihre Längsachsen annähernd koaxial verlaufen,
- Fig. 2: den Schlauchanschluss aus Figur 1 in einem vergrößerten Detail-Längsschnitt in dem in Figur 1 gekennzeichneten Bereich zwischen Anschlussstück und Überwurfmutter,
- Fig. 3: einen Längsschnitt des in Figuren 1 und 2 gezeigten Schlauchanschlusses, wobei der Anschlussstutzen relativ zur Überwurfmutter leicht gekippt ist,
- Fig. 4: einen mit Figur 2 vergleichbaren Detail-Längsschnitt in dem in Figur 3 umkreisten Bereich zwischen Anschlussstück und Überwurfmutter,
- Fig. 5: einen Längsschnitt durch den in den Figuren 1 bis 4 gezeigten Schlauchanschluss, wobei die Längsachsen von Anschlussstück und Überwurfmutter zwar achsparallel, aber in seitlicher Richtung geringfügig voneinander beabstandet sind,
- Fig. 6: einen mit den Figuren 2 und 4 vergleichbaren Detail-Längsschnitt in dem in Figur 5 umkreisten Bereich zwischen dem Anschlussstück und der Überwurfmutter, und
- Fig.7: den Schlauchanschluss aus den Figuren 1 bis 6 in einer auseindergezogenen Perspektivdarstellung seiner Bestandteile.

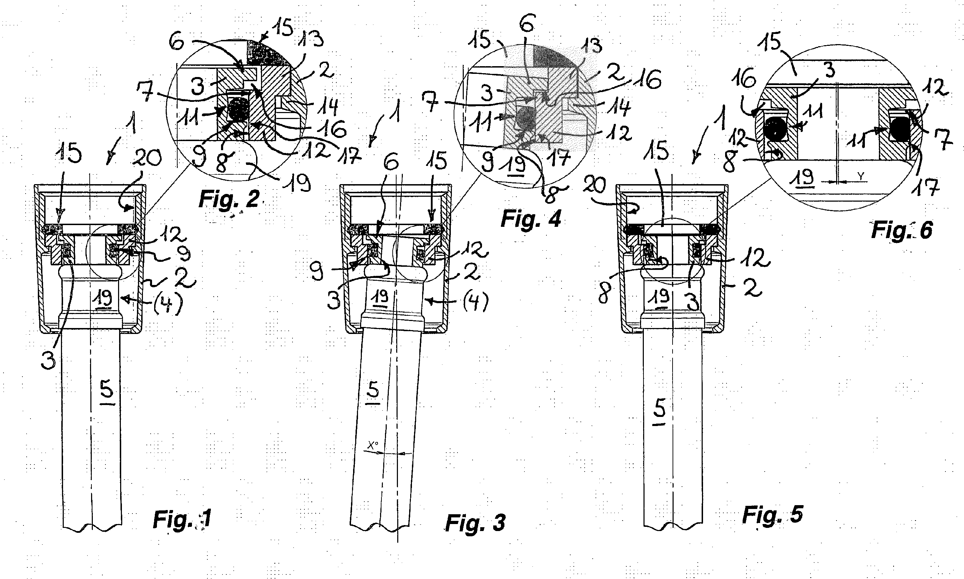

In den Figuren 1 bis 7 ist ein Schlauchanschluss 1 für eine flexible Schlauchleitung 5 und insbesondere für einen flexiblen sanitären Wasseranschluss dargestellt. Der Schlauchanschluss 1 weist eine hülsenförmige Überwurfmutter 2 auf, mit welcher der Schlauchanschluss 1 über eine Schlauchverbindung mit einem zu- oder abströmseitigen, hier nicht weiter dargestellten Leitungsabschnitt verbunden werden kann. Die Überwurfmutter 2 umgreift ein ebenfalls hülsenförmiges Anschlussstück 3 das mit eine Schlauchende 4 einer flexiblen Schlauchleitung 5 verbunden ist. An seinem dem Schlauchende 4 abgewandten Stirnendbereich weist das Anschlussstück 3 einen Ringflansch 6 auf, der auf einem Ringabsatz 7 einer im Hülseninneren der Überwurfmutter 2 befindlichen Umfangswandung 8 drehbar aufliegt.

Um einen zwischen dem Anschlussstück 3 und der Umfangswandung 8 vorgesehenen Ringspalt radial abzudichten, ist zumindest ein Dichtring 9 vorgesehen, der in einer außenumfangsseitig am Anschlussstück 3 angeordneten Haltenut 10 gehalten ist. Zwischen dem Anschlussstück 3 und der Umfangswandung 8 ist ein derart bemessenes Spiel vorgesehen, dass Anschlussstück 3 und Umfangswandung 8 relativ zueinander kippbar sind. Die für den zumindest einen Dichtring 9 vorgesehene Haltenut 10 weist einen Nutgrund 11 auf, der als eine konvex geformte Auswölbung ausgestaltet ist. Der zwischen dem Nutgrund 11 und der Umfangswandung 8 dicht eingespannte Dichtring 9 wird somit bei einer Kippbewegung tangential belastet beziehungsweise die kugelige oder konvexe Form des Nutgrundes 11 und der Dichtring 9 werden tangential zueinander ausgerichtet.

Da der Dichtring 9 somit allseits mit einer verkleinerten, umlaufend linienförmigen Auflagefläche anliegt, wird ein leichteres Losbrechen des Dichtrings 9 allein schon bei einem geringfügigen Verkippen des Anschlussstückes 3 relativ zur Überwurfmutter 2 erreicht. Durch ein leichtes Losbrechen des Dichtrings 9 wird ein unerwünschtes Festbacken der Überwurfmutter 2 und des Anschlussstückes 3 verhindert, was andernfalls ein leichtgängiges Verdrehen zwischen diesen Bestandteilen 2,3 des Schlauchanschlusses 1 behindern könnte.

Die den Ringabsatz 7 tragende Umfangswandung 8 könnte auch am Innenumfang der hülsenförmigen Überwurfmutter 2 vorgesehen sein. Hier jedoch weist der Schlauchanschluss 1 einen Zwischenring 12 auf, der an der eine Ringöffnung umgrenzenden Umfangswandung 8 den Ringabsatz 7 trägt. Dieser Zwischenring 12 ist drehbar am Innenumfang der Überwurfmutter 2 gehalten, wodurch ein Aufschrauben der Überwurfmutter 2 auf das Leitungsende eines zu- oder abströmseitigen Leitungsabschnitts erleichtert wird. Zudem wird ein Verdrehen des Schlauches während der Anwendung ermöglicht.

Wie aus den Figuren 2, 4 und 6 deutlich wird, trägt der Zwischenring 12 dazu an seinem dem Schlauchende 4 abgewandten Stirnendbereich außenumfangsseitig einen Ringflansch 13, der auf einem am Hülseninnenumfang der Überwurfmutter 2 vorgesehenen Ringabsatz 14 oder Ringflansch drehbar aufliegt. Auf der dem Schlauchende 4 abgewandten Stirnseite des Zwischenrings 12 liegt eine Ringdichtung 15 auf, die einen Ringspalt zwischen dem Außenumfang des Zwischenrings 12 und dem Innenumfang der hülsenförmigen Überwurfmutter 2 axial abdichtet. Sowohl der im Ringquerschnitt runde Dichtring 9 als auch die scheibenförmige Ringdichtung 15 sind aus elastischem Material hergestellt.

In Figur 4 ist besonders gut erkennbar, dass der Abstand zwischen dem am Zwischenring 12 vorgesehenen Ringabsatz 7 im Vergleich zur Höhe des am Außenumfang des Anschlussstückes 3 radial vorstehenden Ringflansches 6 größer ist, sodass die dem Schlauchende 4 abgewandte Stirnfläche des Anschlussstückes 3 von einer benachbarten Stirnseite der Ringdichtung 15 derart beabstandet ist, dass eine Kippbewegung des Anschlussstückes 3 relativ zur Überwurfmutter 2 und zum Zwischenring 12 nicht behindert wird.

In den Detail-Längsschnitten in Figur 2 und 4 ist erkennbar, dass der am Anschlussstück 3 vorgesehene Ringflansch 6 gestuft ausgestaltet ist und auf seiner dem Schlauchende 4 zugewandten Flansch-Innenseite einen ringförmig umlaufenden Falz 16 trägt, der im Vergleich, zum lichten Durchmesser des Zwischenrings 12 einen demgegenüberreduzierten Außendurchmesser aufweist. Dieser Falz 16 bildet eine Stützkante, die auch bei einer Kippbewegung gewährleistet, dass das Anschlussstück 3 gegenüber dem Zwischenring 12 und der Überwurfmutter 2 konzentrisch gehalten ist und bleibt. Die durch den Falz 16 gebildete Stützkante erleichtert die Kippbewegung des Anschlussstückes 3 in der Überwurfmutter 2. Durch die konzentrische Anordnung des Anschlussstückes 3 gegenüber der Überwurfmutter 2 und dem Zwischenring 12 wird gewährleistet, dass der Dichtring 9 den Ringspalt zwischen dem Anschlussstück 3 und der Umfangswandung 8 stets gut abdichten kann. Dabei ist das Anschlussstück 3 zwischen einer koaxial oder achsparallel zur Längsachse der Überwurfmutter 2 angeordneten und in den Figuren 1 und 5 gezeigten Nullstellung und einer relativ zur Längsachse der Überwurfmutter 2 abgewinkelten und in Figur 3 näher dargestellten Kippstellung kippbar. In der in Figur 3 und 4 gezeigten Kippstellung greifen der am Ringflansch 6 des Anschlussstückes 3 vorgesehene Falz 16 und der innenumfangsseitig am Zwischenring 12 angeordnete Ringabsatz 7 ineinander ein.

Aus einem Vergleich der Figuren 2, 4 und 6 wird deutlich, dass die die Haltenut 10 umgrenzende und dem Schlauchende 4 zugewandte Kante des Anschlussstückes 3 als umlaufender und vorzugsweise gerundeter Vorsprung 17 ausgestaltet ist und dass der dem Schlauchende 4 zugewandte Teilbereich des Anschlussstückes: 3 einen im Vergleich zum Außendurchmesser des Vorsprungs 17 reduzierten Außendurchmesser hat.

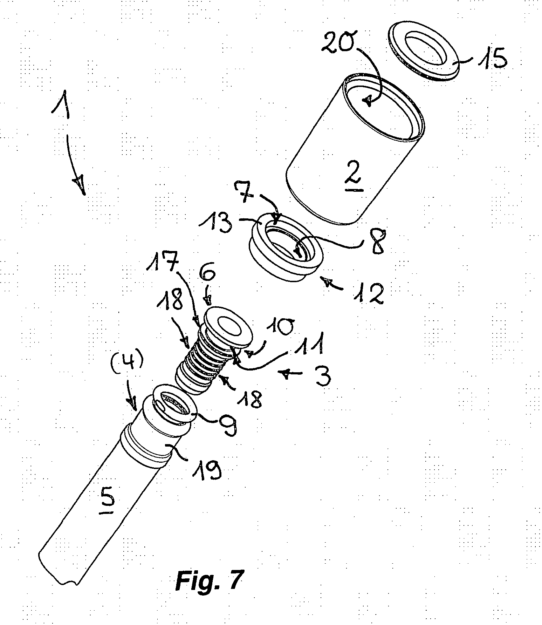

Um das Schlauchende 4 der flexiblen Schlauchleitung 5 mit dem Anschlussstück 3 verbinden zu können, weist das Anschlussstück 3 einen in Figur 7 erkennbaren profilierten Anschlussnippel 18 auf, auf den das Schlauchende 4 aufgeschoben werden kann. Sobald das Schlauchende 4 der Schlauchleitung 5 auf den Anschlussnippel 18 am Anschlussstück 3 aufgeschoben ist, wird das Schlauchende 4 auf dem Anschlussstück 3 mit einer dort vercrimpten Quetschhülse 19 in axialer Richtung gesichert.

Um die Überwurfmutter 2 mit dem Leitungsende eines zu- oder abströmseitigen Leitungsabschnitts verbinden zu können, ist in dem über das Anschlussstück 3 und die Ringdichtung 15 überstehenden Abschnitt der hülsenförmigen Überwurfmutter 2 innenumfangsseitig ein Innengewinde 20 vorgesehen. Mit diesem Innengewinde 20 kann die Überwurfmutter 3 auf ein an dem Leitungsende des zu- oder abströmseitigen Leitungsabschnitts vorgesehenen Gegengewinde derart aufgeschraubt werden, dass die Ringdichtung 15 zwischen dem Leitungsende und dem in der Überwurfmutter 2 vorgesehenen Zwischenring 12 eingespannt ist.

Aus den Figuren 1 bis 7 wird deutlich, dass zwischen dem Anschlussstück 3 und der Umfangswandung 8 des Zwischenrings 12 sowie dem Hülseninnenumfang der Überwurfmutter 2 und der Schlauchleitung 5 ein derart bemessenes Spiel vorgesehen ist, dass das Anschlussstück 3 relativ zur Umfangswandung 8 des Zwischenrings 12 verkippt werden kann. Wie aus Figur 6 deutlich wird, wird durch dieses axiale Spiel auch eine exzentrische Verschiebung des Anschlussstückes 3 gegenüber dem Zwischenring 12 und der Überwurfmutter 2 ermöglicht. Demgegenüber liegt das Anschlussstück 3 in dem Figur 2 gezeigten Detail-Längsschnitt nur einseitig mit seinem Außenumfang an der Umfangswandung 8 des Zwischenrings 12 an.

### Bezugszeichenliste

- 1: Schlauchanschluss
- 2: Überwurfmutter
- 3: Anschlussstück
- 4: Schlauchende
- 5: Schlauchleitung
- 6: Ringflansch (am Anschlussstück 3)
- 7: Ringabsatz (an der Umfangswandung 8)
- 8: Umfangswandung
- 9: Dichtring
- 10: Haltenut
- 11: Nutgrund
- 12: Zwischenring
- 13: Ringflansch (am Zwischenring 12)
- 14: Ringabsatz (am Hülseninnenumfang der Überwurfmutter 2)
- 15: Ringdichtung
- 16: Falz
- 17: Vorsprung
- 18: Anschlussnippel
- 19: Quetschhülse
- 20: Innengewinde (an der Überwurfmutter 2)

## Patentansprüche

1. Flexible Schlauchleitung (5) mit einem Schlauchanschluss (1), der eine hülsenförmige Überwurfmutter (2) aufweist, die (2) ein hülsenförmiges Anschlussstück (3) umgreift, das (3) mit einem Schlauchende (4) der flexiblen Schlauchleitung (5) verbunden ist und das (3) an seinem dem Schlauchende (4) abgewandten Stirnendbereich einen Ringflansch (6) hat, der (6) auf einem Ringabsatz (7) einer Umfangswandung (8) drehbar aufliegt, sowie mit zumindest einem Dichtring (9), der in einer außenumfangseitig am Anschlussstück (3) vorgesehenen Haltenut (10) gehalten ist wobei zwischen einem Hülseninnenumfang der hülsenförmigen Überwurfmutter (2) und der Schlauchleitung (5) ein Spiel vorgesehen ist, **dadurch gekennzeichnet, dass** der Dichtring (9) einen zwischen dem Anschlussstück (3) und der Umfangswandung (8) vorgesehenen Ringspalt radial abdichtet, und dass ein Spiel zwischen dem Anschlussstück (3) und der Umfangswandung (8) sowie das Spiel zwischen dem Hülseninnenumfang der Überwurfmutter (2) und der Schlauchleitung (5) derart bemessen sind, dass das Anschlussstück (3) und die Umfangswandung (8) relativ zueinander kippbar sind, sodass ein unerwünschtes Festbacken der Überwurfmutter (2) und des Anschlussstücks (3) durch Kalkablagerungen vermieden werden kann.

2. Flexible Schlauchleitung nach Anspruch 1, **dadurch gekennzeichnet, dass** die Haltenut (10) einen Nutgrund (11) hat, der (11) als eine konvex geformte Auswölbung: ausgestaltet ist.

3. Flexible Schlauchleitung nach Anspruch 1 oder 2, **dadurch gekennzeichnet, dass** der Ringflansch (6) relativ zum Ringabsatz (7) der Umfangswandung (8) um die Längsachse verdrehbar ist.

4. Flexible Schlauchleitung nach einem der Ansprüche 1 bis 3, **dadurch gekennzeichnet, dass** der Schlauchanschluss (1) einen Zwischenring (12) aufweist, der (12) an der eine Ringöffnung umgrenzenden Umfangswandung (8) den Ringabsatz (7) trägt, und der (12) drehbar am Innenumfang der hülsenförmigen Überwurfmutter (2) gehalten ist.

5. Flexible Schlauchleitung nach Anspruch 4, **dadurch gekennzeichnet, dass** : der Zwischenring (12) an seinem dem Schlauchende (4) abgewandten Stirnendbereich außenumfangsseitig einen Ringflansch (13) trägt, welcher Ringflansch (13) auf einem am Hülseninnenumfang der Überwurfmutter (2) vorgesehenen Ringabsatz (14) oder Ringflansch vorzugsweise drehbar aufliegt.

6. Flexible Schlauchleitung nach Anspruch 4 oder 5, **dadurch gekennzeichnet, dass** auf der dem Schlauchende (4) abgewandten Stirnseite des Zwischenrings (12) eine Ringdichtung (15) aufliegt, die (15) einen Ringspalt zwischen dem Außenumfang des Zwischenrings (12) und dem Innenumfang der hülsenförmigen Überwurfmutter (2) axial abdichtet.

7. Flexible Schlauchleitung nach einem der vorstehenden Ansprüche, wenn vorzugsweise vom Anspruch 6 abhängig, **dadurch gekennzeichnet, dass** der Dichtring (9) und vorzugsweise auch die Ringdichtung (15) aus elastischem Material hergestellt sind.

8. Flexible Schlauchleitung nach Anspruch 6 oder 7, **dadurch gekennzeichnet, dass** die dem Schlauchende (4) abgewandte Stirnfläche des Anschlussstücks (3) von einer benachbarten Stirnseite der Ringdichtung (15) beabstandet ist.

9. Flexible Schlauchleitung nach einem der Ansprüche 4 bis 8, **dadurch gekennzeichnet, dass** der am Anschlussstück (3) vorgesehene Ringflansch (6) gestuft ausgestaltet ist und auf seiner dem Schlauchende (4) zugewandten Flansch-Innenseite einen ringförmig umlaufenden Falz (16) trägt, welcher Falz (16) im Vergleich zum lichten Durchmesser des Zwischenrings (12) einen demgegenüber reduzierten Außendurchmesser aufweist.

10. Flexible Schlauchleitung nach Anspruch 9, **dadurch gekennzeichnet, dass** das Anschlussstück (3) zwischen einer koaxial oder achsparallel zur Längsachse der hülsenförmigen Überwurfmutter (2) angeordneten Nullstellung und einer relativ zur Längsachse der hülsenförmigen Überwurfmutter (2) abgelegenen Kippstellung kippbar ist und das in der Kippstellung der am Ringflansch (6) des Anschlussstücks (3) vorgesehene Falz (16) und der Ringabsatz (7) zumindest in einem Umfangs-Teilbereich ineinander greifen.

11. Flexible Schlauchleitung nach einem der Ansprüche 1 bis 10, **dadurch gekennzeichnet, dass** eine die Haltenut (10) umgrenzende und dem Schlauchende (4) zugewandte Kante als umlaufender und vorzugsweise gerundeter Vorsprung (17) ausgestaltet ist.

12. Flexible Schlauchleitung nach Anspruch 11, **dadurch gekennzeichnet, dass** der dem Schlauchende (4) zugewandte Teilbereich des Anschlussstückes (3) eine im Vergleich zum Außendurchmesser des Vorsprungs (17) reduzierten Außendurchmesser hat.

13. Flexible Schlauchleitung nach einem der Ansprüche 1 bis 12, **dadurch gekennzeichnet, dass** der Dichtring (9) einen runden Ringquerschnitt aufweist.

14. Flexible Schlauchleitung nach einem der Ansprüche 6 bis 13 **dadurch gekennzeichnet, dass** die Ringdichtung (15) scheibenförmig ausgestaltet ist.

## Claims

1. Flexible hose (5) having a hose connection (1) which has a sleeve-like union nut (2) which (2) engages around a sleeve-like connecting piece (3), which (3) is connected to a hose end (4) of the flexible hose (5) and which (3), on its front end region facing away from the hose end (4), has an annular flange (6) which (6) bears rotatably on an annular ledge (7) of a circumferential wall (8), and having at least one sealing ring (9), which is retained in a retaining groove (10) formed on an outer circumferential side of the connecting piece (3), a clearance being provided between a sleeve inner circumference of the sleeve-like union nut (2) and the hose (5), **characterized in that** the sealing ring (9) radially seals off an annular gap provided between the connecting piece (3) and the circumferential wall (8), and **in that** a clearance between the connecting piece (3) and the circumferential wall (8) and the clearance between the sleeve inner circumference of the union nut (2) and the hose (5) are dimensioned in such a way that the connecting piece (3) and the circumferential wall (8) can be tilted relative to each other, so that undesired clogging of the union nut (2) and the connecting piece (3) as a result of scale deposits can be avoided.

2. Flexible hose according to Claim 1, **characterized in that** the retaining groove (10) has a groove base (11) which (11) is configured as a convexly shaped bulge.

3. Flexible hose according to Claim 1 or 2, **characterized in that** the annular flange (6) can be rotated relative to the annular ledge (7) of the circumferential wall (8) about the longitudinal axis.

4. Flexible hose according to one of Claims 1 to 3, **characterized in that** the hose connection (1) has an intermediate ring (12) which (12) bears the annular ledge (7) on the circumferential wall (8) surrounding an annular opening, and which (12) is retained rotatably on the inner circumference of the sleeve-like union nut (2).

5. Flexible hose according to Claim 4, **characterized in that** the intermediate ring (12) has, on its front end region facing away from the hose end (4), an annular flange (13) on the outer circumferential side, which annular flange (13) preferably bears rotatably on an annular ledge (14) or annular flange provided on the sleeve inner circumference of the union nut (2).

6. Flexible hose according to Claim 4 or 5, **characterized in that** an annular seal (15) bears on the front side of the intermediate ring (12), facing away from the hose end (4), which (15) axially seals off an annular gap between the outer circumference of the intermediate ring (12) and the inner circumference of the sleeve-like union nut (2).

7. Flexible hose according to one of the preceding claims, if preferably dependent on Claim 6, **characterized in that** the sealing ring (9) and preferably also the annular seal (15) are produced from elastic material.

8. Flexible hose according to Claim 6 or 7, **characterized in that** the end face of the connecting piece (3) that faces away from the hose end (4) is spaced apart from an adjacent front side of the annular seal (15).

9. Flexible hose according to one of Claims 4 to 8, **characterized in that** the annular flange (6) provided on the connecting piece (3) is configured in a stepped manner and, on its flange inner side facing the hose end (4) bears an annular circumferential rebate (16), which rebate (16) has a reduced external diameter in comparison with the clear diameter of the intermediate ring (12).

10. Flexible hose according to Claim 9, **characterized in that** the connecting piece (3) can be tilted between a neutral position arranged coaxially or parallel to the longitudinal axis of the sleeve-like union nut (2) and a tilted position placed relative to the longitudinal axis of the sleeve-like union nut (2), and **in that** in the tilted position the rebate (16) provided on the annular flange (6) of the connecting piece (3) and the annular ledge (7) interengage, at least in a circumferential sub-region.

11. Flexible hose according to one of Claims 1 to 10, **characterized in that** an edge surrounding the retaining groove (10) and facing the hose end (4) is configured as a circumferential and preferably rounded projection (17).

12. Flexible hose according to Claim 11, **characterized in that** the sub-region of the connecting piece (3) that faces the hose end (4) has an external diameter that is reduced in comparison with the external diameter of the projection (17).

13. Flexible hose according to one of Claims 1 to 12, **characterized in that** the sealing ring (9) has a round ring cross section.

14. Flexible hose according to one of Claims 6 to 13, **characterized in that** the annular seal (15) is disc-shaped.

## Revendications

1. Tuyau flexible (5) avec un raccord de tuyau (1), qui présente un écrou de raccord en forme de douille (2), qui (2) entoure une pièce de raccordement en forme de douille (3), qui (3) est assemblée à une extrémité de tuyau (4) du tuyau flexible (5) et qui (3) comporte à sa région d'extrémité frontale détournée de l'extrémité de tuyau (4) une bride annulaire (6), qui (6) est appliquée de façon rotative sur un épaulement annulaire (7) d'une paroi périphérique (8), ainsi qu'avec au moins un anneau d'étanchéité (9), qui est maintenu dans une rainure de maintien (10) prévue sur le côté périphérique extérieur sur la pièce de raccordement (3), dans lequel il est prévu un jeu entre une périphérie intérieure de douille de l'écrou de raccord en forme de douille (2) et le tuyau (5), **caractérisé en ce que** l'anneau d'étanchéité (9) rend étanche radialement une fente annuaire prévue entre la pièce de raccordement (3) et la paroi périphérique (8), et **en ce qu'**un jeu entre la pièce de raccordement (3) et la paroi périphérique (8) ainsi que le jeu entre la périphérie intérieure de douille de l'écrou de raccord (2) et le tuyau (5) sont dimensionnés de telle manière que la pièce de raccordement (3) et la paroi périphérique (8) puissent basculer l'une par rapport à l'autre, de telle manière qu'un blocage indésirable de l'écrou de raccord (2) et de la pièce de raccordement (3) par suite de dépôts de calcaire puisse être évité.

2. Tuyau flexible selon la revendication 1, **caractérisé en ce que** la rainure de maintien (10) comporte un fond de rainure (11), qui (11) est formé par un bombage convexe.

3. Tuyau flexible selon une revendication 1 ou 2, **caractérisé en ce que** la bride annulaire (6) peut tourner autour de l'axe longitudinal par rapport à l'épaulement annulaire (7) de la paroi périphérique (8).

4. Tuyau flexible selon l'une quelconque des revendications 1 à 3, **caractérisé en ce que** le raccord de tuyau (1) présente une bague intermédiaire (12), qui (12) porte l'épaulement annulaire (7) sur la paroi périphérique (8) limitant une ouverture annulaire, et qui (12) est maintenue de façon rotative sur la périphérie intérieure de l'écrou de raccord en forme de douille (2).

5. Tuyau flexible selon la revendication 4, **caractérisé en ce que** la bague intermédiaire (12) porte dans sa région d'extrémité frontale éloignée de l'extrémité de tuyau (4), sur le côté périphérique extérieur, une bride annulaire (13), bride annulaire (13) qui s'applique de préférence de façon rotative sur un épaulement annulaire (14) ou sur une bride annulaire prévu(e) à la périphérie intérieure de la douille de l'écrou de raccord (2).

6. Tuyau flexible selon une revendication 4 ou 5, **caractérisé en ce qu'**un joint annulaire (15) s'applique sur le côté frontal de la bague intermédiaire (12) détourné de l'extrémité de tuyau (4), qui (15) rend étanche axialement une fente annulaire entre la périphérie extérieure de la bague intermédiaire (12) et la périphérie intérieure de l'écrou de raccord en forme de douille (2).

7. Tuyau flexible selon l'une quelconque des revendications précédentes, lorsqu'elle dépend de préférence de la revendication 6, **caractérisé en ce que** l'anneau d'étanchéité (9) et de préférence également le joint annulaire (15) sont fabriqués en un matériau élastique.

8. Tuyau flexible selon une revendication 6 ou 7, **caractérisé en ce que** la face frontale de la pièce de raccordement (3) détournée de l'extrémité de tuyau (4) est espacée d'un côté frontal voisin du joint annulaire (15).

9. Tuyau flexible selon l'une quelconque des revendications 4 à 8, **caractérisé en ce que** la bride annulaire (6) prévue sur la pièce de raccordement (3) est de forme étagée et porte sur son côté intérieur de bride tourné vers l'extrémité de tuyau (4) un gradin périphérique annulaire (16), gradin (16) qui présente par comparaison avec le diamètre libre de la bague intermédiaire (12) un diamètre extérieur réduit par rapport à celle-ci.

10. Tuyau flexible selon la revendication 9, **caractérisé en ce que** la pièce de raccordement (3) peut basculer entre une position zéro disposée de façon coaxiale ou d'axe parallèle à l'axe longitudinal de l'écrou de raccord en forme de douille (2) et une position inclinée déportée par rapport à l'axe longitudinal de l'écrou de raccord en forme de douille (2) et **en ce que** dans la position inclinée le gradin (16) prévu sur la bride annulaire (6) de la pièce de raccordement (3) et l'épaulement annulaire (7) s'engagent l'un dans l'autre au moins dans une région partielle de la périphérie.

11. Tuyau flexible selon l'une quelconque des revendications 1 à 10, **caractérisé en ce qu'**un bord entourant la rainure de maintien (10) et tourné vers l'extrémité de tuyau (4) est réalisé sous la forme d'une saillie périphérique et de préférence arrondie (17).

12. Tuyau flexible selon la revendication 11, **caractérisé en ce que** la région partielle de la pièce de raccordement (3) tournée vers l'extrémité de tuyau (4) présente un diamètre extérieur réduit par rapport au diamètre extérieur de la saillie (17).

13. Tuyau flexible selon l'une quelconque des revendications 1 à 12, **caractérisé en ce que** l'anneau d'étanchéité (9) présente une section transversale d'anneau ronde.

14. Tuyau flexible selon l'une quelconque des revendications 6 à 13, **caractérisé en ce que** le joint annulaire (15) est réalisé en forme de disque.
